# DEMANDE DE BREVET EUROPEEN

(11) **EP 1 097 777 A1**
(43) Date de publication de la demande: **09.05.2001**
(21) Numéro de dépôt: 00460062.3
(22) Date de dépôt: 07.11.2000
(51) Int. Cl.: B23K 11/36, B23K 11/11, B23K 11/25

(54) **Procédé de contrôle d'une opération de soudage mis en oeuvre par une machine de soudure par points**

(30) Priorité: 08.11.1999 FR 9914254
(71) Demandeur: Soudax Equipment S.A.R.L., 78681 Epone Cedexe (FR)
(72) Inventeur: Despointes, Marie-Pierre, 78681 Epone, Cedex (FR); Olivo, Jean-Pierre, 78681 Epone, Cedex (FR)
(74) Mandataire: Maillet, Alain

(57) **Abrégé**

La présente invention concerne un procédé de contrôle d'une opération de soudage mis en oeuvre par une machine de soudure par points comprenant une électrode fixe (22) et une électrode mobile (41) en direction de l'électrode fixe (22), ladite électrode mobile (41) étant prévue pendant la phase d'accostage pour entrer en contact avec un des deux composants (D1, D2) destinés à être soudés l'un à l'autre et préalablement déposés sur l'électrode fixe (22). Le procédé est remarquable en ce qu'il consiste à réaliser une mesure (P) de la distance séparant l'électrode fixe (22) de l'électrode mobile (41) lorsque ladite électrode mobile (41) entre en contact avec l'un des deux composants (D1, D2) et à suspendre l'opération de soudage si la mesure (P) n'est pas comprise à l'intérieur d'une plage de variables (Pm, PM) représentatives de l'épaisseur minimum et maximum des composants (D1, D2).

## Description

La présente invention concerne un procédé de contrôle d'une opération de soudage par points et, en particulier, un procédé agissant avant et après l'opération de soudage. L'invention a de nombreuses applications dans les industries électromécaniques.

Une machine de soudure par points est généralement constituée d'un porte-électrodes fixe et d'un porte-électrodes mobile. Ce dernier est monté sur un moyen de pression comme un électro-aimant ou un vérin.

Les deux porte-électrodes sont reliés respectivement aux bornes d'une source de courant électrique contrôlée par une électronique de commande.

Pour réaliser la soudure de deux composants métalliques l'un à l'autre, on les dépose sur la machine, par exemple sur l'électrode du porte-électrodes fixe, puis le moyen de pression est mis en marche, ce qui a pour effet de mettre en appui l'électrode du porte-électrodes mobile avec l'un des composants à souder.

Ensuite, l'électronique de commande est mise oeuvre pour que la source de courant délivre pendant un court instant un courant de forte intensité aux bornes de chacune des porte-électrodes.

Le courant circule entre les deux électrodes et chauffe localement une zone de matière située à la frontière des deux composants, et positionnée dans l'axe desdits électrodes, jusqu'a provoquer la soudure des deux composants par fusion de la matière.

La dépose des composants sur le porte-électrodes fixe est le plus souvent réalisée par un robot de manipulation qui dépose les composants à souder sur l'électrode du porte-électrodes fixe de la machine, puis les évacue après soudure.

Or, il arrive parfois que le robot de manipulation ne dépose pas ou dépose de travers les composants sur l'électrode du porte-électrodes fixe de la machine. Il arrive également que le robot de manipulation déforme lors de leur préhension ou de leurs déposes lesdits composants.

En tout état de cause, ces différents inconvénients ont pour premier effet d'altérer la qualité de la soudure.

Les électrodes ou porte-électrodes peuvent être également détériorés par l'absence de composants si le courant de soudage est délivré alors qu'ils sont mis en contact direct l'un avec l'autre. La mauvaise disposition des composants peut également tordre les électrodes ou porte électrodes.

Par ailleurs, lorsque les composants à souder sont correctement disposés sur l'électrode du porte-électrodes fixe, il convient de les souder convenablement.

En effet, l'assemblage réalisé doit permettre d'obtenir des caractéristiques mécaniques minimum pour que les composants soudés assurent correctement leur fonction.

Le but de l'invention est donc de proposer un procédé de contrôle d'une opération de soudage par points qui permette de vérifier que les composants à souder sont bien présents et correctement disposés sur le support de soudage et sont géométriquement acceptables pour être soudés correctement l'un à l'autre.

A cet effet, le procédé de l'invention est remarquable en ce qu'il consiste à réaliser une mesure P de la distance séparant l'électrode fixe de l'électrode mobile lorsque ladite électrode mobile entre en contact avec l'un des deux composants destinés à être soudés l'un à l'autre et à suspendre l'opération de soudage si la mesure P n'est pas comprise à l'intérieur d'une plage de variables Pm et PM représentatives de l'épaisseur minimum et maximum des composants.

Ainsi, seuls les composants correctement disposés ou dont la géométrie est acceptable sont soudés.

Selon une autre caractéristique de l'invention, et afin de permettre d'initialiser la mesure P, le procédé de l'invention consiste pendant la phase de réglage de la machine de soudure par points à mettre en contact l'électrode fixe avec l'électrode mobile, puis à réaliser une mesure et assigner la valeur zéro à cette mesure pour définir une position de référence de l'électrode mobile.

La machine de soudure par points mettant en oeuvre le procédé de l'invention est également protégée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en coupe d'une machine de soudure par points dans sa position d'attente,
la Fig. 2 représente une vue en coupe d'une machine de soudure par points dans sa position de soudage, et

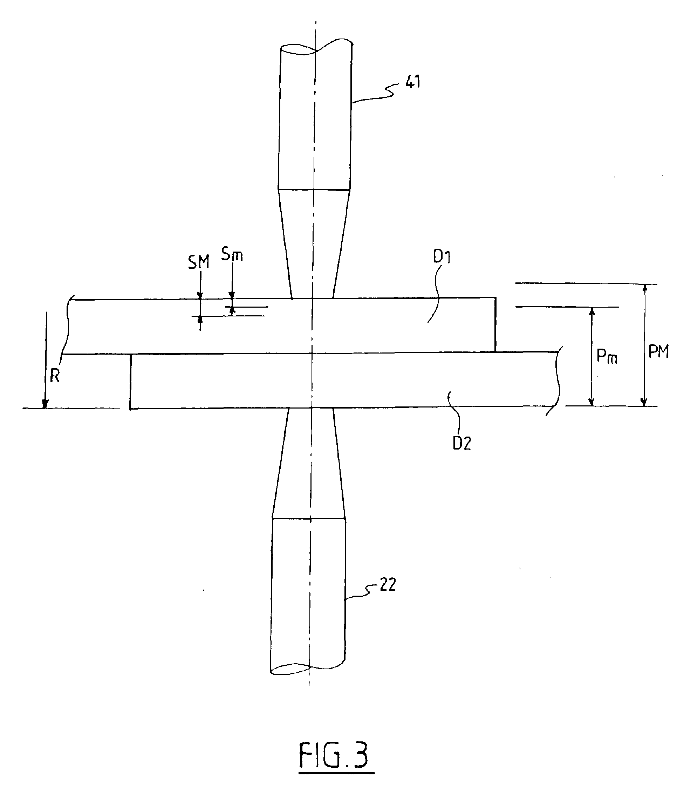

la Fig. 3 représente une vue de détails des électrodes d'une machine de soudure par points dans sa position de soudage.

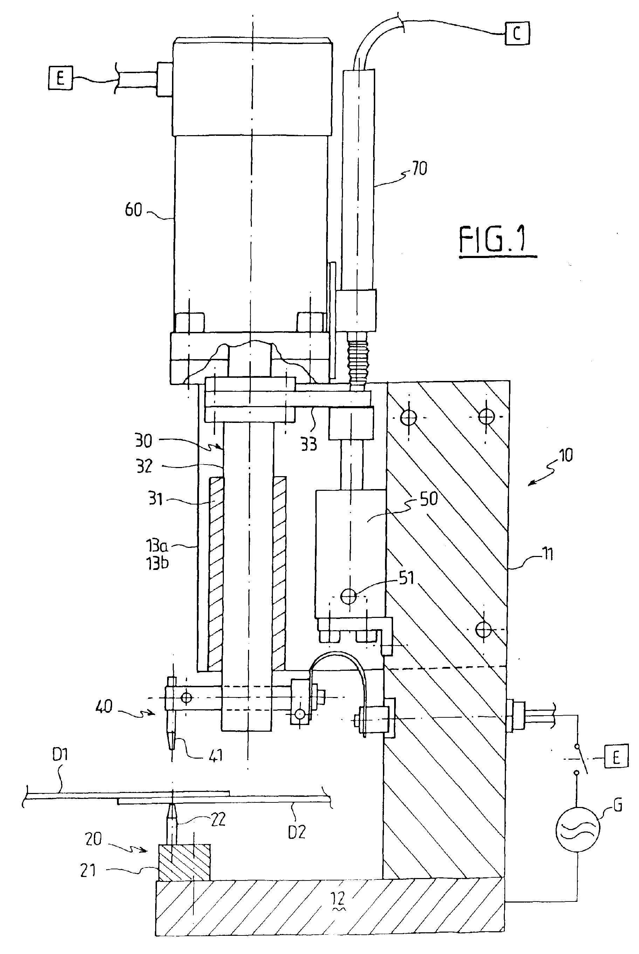

La machine de soudure par points représentée à la Fig. 1 est globalement constituée d'un bâti 10, sur lequel sont montés un porte-électrodes fixe 20, un équipage mobile 30 comprenant entre autres un porte-électrodes mobile 40.

Un capteur de position 70 est également installé entre le bâti 10 et l'équipage mobile 30.

Le bâti 10 est constitué d'une poutre 11 rapportée sur une embase 12. Deux flasques 13a et 13b sont rapportés de chaque côté de la partie haute de la poutre 11.

Le porte-électrodes fixe 20 est rapporté sur l'embase 12. Il est constitué d'un support 21 sur lequel est montée une électrode fixe 22 reliée électriquement à une première borne d'un générateur de courant G.

L'électrode fixe 22 est prévue pour recevoir deux composants Dl et D2 comme cela est représenté à la Fig. 1 et qu'il convient de souder ensemble avec la machine à souder par points.

L'équipage mobile 30 est monté à coulissement par un dispositif de guidage linéaire 31 disposé entre les flasques 13a et 13b.

L'équipage mobile 30 est constitué d'un plongeur 32 dont une première extrémité est pourvue d'un porte-électrodes mobile 40 sur lequel est montée de manière coaxiale à l'électrode fixe 22, une électrode mobile 41.

L'électrode mobile 41 est raccordée électriquement à la seconde borne du générateur G.

Celui-ci peut être mis en oeuvre par une électronique de commande E prévue en particulier pour fermer pendant un temps T, correspondant à un temps de soudure, le circuit du générateur de courant G.

La seconde extrémité du plongeur 32 est fixée à un doigt 33 prévu pour permettre l'entraînement en translation de l'équipage mobile 30.

Un vérin 50 comme un vérin pneumatique tel que cela est représenté à la Fig. 1 est fixé contre la poutre 11.

Il est alimenté en pression par l'intermédiaire d'un électro-distributeur, non représenté, qui est piloté par l'électronique de commande E.

Lorsque le vérin 50 est alimenté en pression dans sa chambre arrière par l'orifice 51, il exerce une force sur le doigt 33 de manière à déplacer l'équipage mobile 30 dans une position haute, qui éloigne l'électrode mobile 41 de l'électrode fixe 22 comme cela est représenté à la Fig. 1.

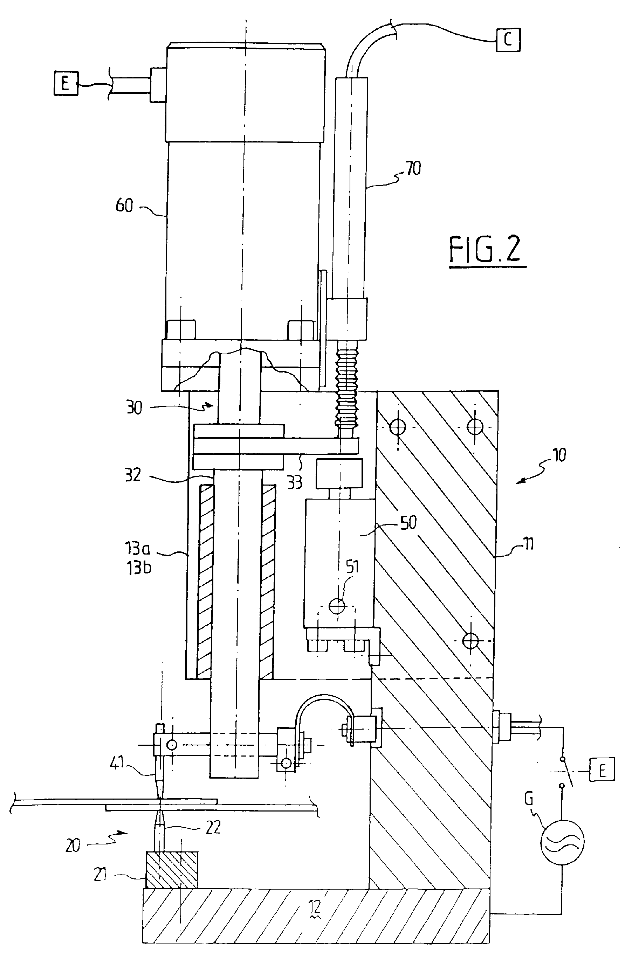

Lorsque la chambre arrière du vérin 50 se purge, l'équipage mobile 30 se déplace sous l'action de son propre poids dans une position basse qui rapproche l'électrode mobile 41 de l'électrode fixe 22 soit pour les mettre en contact l'une de l'autre, soit pour mettre en contact l'électrode mobile 41 avec la face supérieure du composant D1 comme cela est représenté à la Fig. 2.

A la Fig. 1, un électro-aimant 60 est fixé dans le prolongement du plongeur 32 entre les flasques 13a et 13b et dans leur partie haute. Il est mis sous tension par l'électronique de commande E, en particulier lorsque l'équipage mobile 30 est dans sa position basse.

Le noyau de l'électro-aimant 60 est fixé au plongeur 32 par l'intermédiaire du doigt 33 de manière à exercer sur l'équipage mobile 30 une force axiale dirigée du haut vers le bas à la Fig. 1 lorsque l'électro-aimant 60 est mis sous tension.

De la sorte, lorsque deux composants à souder D1 et D2 sont déposés et maintenus sur l'électrode fixe 22, l'électrode mobile 41 exerce une force de contact sur le composant D1 pour améliorer le passage d'un courant de soudage entre les deux composants D1 et D2 lors de la phase de soudage.

Un capteur de position 70 est installé entre le bâti 10 et l'équipage mobile 30 dans une direction coaxiale à celle du mouvement de l'équipage mobile 30.

Il est prévu pour mesurer le mouvement relatif entre le bâti 10 et l'équipage mobile 30, et en particulier la distance séparant la pointe de l'électrode fixe 22 de la pointe de l'électrode mobile 41.

Le capteur de position 70 est raccordé à un calculateur C de l'électronique de commande E et peut ainsi lui transmettre en temps réel la mesure qu'il est en train de réaliser.

Pour déterminer la distance séparant les pointes des électrodes fixe 22 et mobile 41, on les met en contact l'une avec l'autre pendant une phase dite de réglage de la machine de soudure par points et l'on assigne la valeur zéro à une mesure R réalisée par le capteur de position 70 à cet instant. Cette mesure R est utilisée comme référence géométrique.

Les épaisseurs minimum Pm et maximum PM des composants à souder considérées comme acceptables pour que la machine de soudure par points accepte de souder ensemble, sont introduites comme variables dans le calculateur C.

Les courses minimum Sm ou maximum SM de l'électrode mobile 41 pendant le temps T de soudure, et considérées comme acceptables pour apprécier la qualité d'une soudure, sont également introduites comme variables dans le calculateur C.

A la Fig. 1, un jeu de composants D1 et D2 a été déposé sur l'électrode fixe 22, et un cycle de soudage peut alors démarrer.

L'électronique de commande E est alors sollicitée. Elle commande d'abord la purge de la chambre arrière du vérin 50 par l'électro-disributeur, ce qui permet à l'équipage mobile 30 de coulisser dans le dispositif de guidage linéaire 31 jusqu'à ce que la pointe de l'électrode mobile 41 entre en contact avec la face supérieure du composant D1.

A cet instant, la machine de soudure par points est dite dans sa phase d'accostage. Le mouvement de l'équipage mobile 30 s'interrompt et le capteur de position 70 réalise une mesure P qui correspond à la distance séparant les pointes des électrodes fixe 22 et mobile 41, c'est-à-dire l'épaisseur des composants D1 et D2.

La mesure P est transmise à l'électronique de commande E qui la compare avec les variables Pm et PM.

Si la valeur de la mesure P n'est pas comprise dans l'intervalle Pm et PM, la soudure des composants D1 et D2 n'est pas réalisée.

L'électronique de commande E commute l'électro-disributeur qui met en pression la chambre arrière du vérin 50 et provoque le retour de l'équipage mobile 30 dans sa position haute.

Un premier signal est également émis par l'électronique de commande E pour avertir l'utilisateur qu'un défaut dans la géométrie des composants C1 et/ou D2 ou dans leur positionnement a été constaté.

Il faut alors déterminer l'origine du défaut et déposer un nouveau jeu de composants D1 et D2 sur l'électrode fixe 22.

Si la valeur de la mesure P est comprise dans l'intervalle Pm et PM, la soudure des composants D1 et D2 est déclenchée et mise en oeuvre de la manière suivante.

L'électronique de commande E met sous tension l'électro-aimant 60, ce qui provoque le serrage des deux composants D1 et D2 entre les pointes des électrodes fixe 22 et mobile 41.

Puis, l'électronique de commande E ferme pendant un temps T le circuit du générateur de courant G. Un courant de soudage traverse alors les composants D1 et D2 en même temps qu'est maintenu le serrage desdits composants entre les pointes des électrodes fixe 22 et mobile 41.

Lorsque le temps T est écoulé, c'est-à-dire lorsque le courant de soudage est interrompu, le capteur de position 70 réalise une mesure M qui est transmise à l'électronique de commande E.

Celle-ci calcule l'opération suivante: P-M et compare le résultat S de ce calcul avec les variables Sm et SM.

Si la valeur de S n'est pas comprise dans l'intervalle Sm et SM, la soudure n'est pas considérée comme correcte par l'électronique de commande E.

Un second signal est alors émis par l'électronique de commande E pour avertir l'utilisateur qu'un défaut de soudure a été constaté, ce qui impose de rebuter les composants D1 et D2 qui viennent d'être soudés l'un à l'autre.

Si la valeur de S est comprise dans l'intervalle Sm et SM, la soudure est considérée comme correcte par l'électronique de commande E.

Dans ces deux cas, l'électronique de commande E commute l'électro-distributeur qui met en pression la chambre arrière du vérin 50 et provoque le retour de l'équipage mobile 30 dans sa position haute.

La machine de soudure par points est prête pour réaliser une autre opération de soudage.

La machine de soudure par points de l'invention permet de déterminer si les composants à souder sont correctement déposés sur l'électrode fixe avant de déclencher l'opération de soudage.

Elle n'autorise également l'opération de soudage que si les deux composants sont bien présents sur l'électrode fixe, ce qui accroît la longévité des électrodes.

Seuls les composants qui ont une épaisseur acceptable peuvent être soudés entre eux par la machine de soudure par points.

La machine de soudure par points de l'invention détermine également la qualité de la soudure réalisée en mesurant la réduction de l'épaisseur des constituants pendant la phase de soudage.

## Revendications

1. Procédé de contrôle d'une opération de soudage mis en oeuvre par une machine de soudure par points comprenant une électrode fixe (22) et une électrode mobile (41) en direction de l'électrode fixe (22), ladite électrode mobile (41) étant prévue pendant la phase d'accostage pour entrer en contact avec un des deux composants (D1, D2) destinés à être soudés l'un à l'autre et préalablement déposés sur l'électrode fixe (22), caractérisé en ce qu'il consiste à réaliser une mesure (P) de la distance séparant l'électrode fixe (22) de l'électrode mobile (41) lorsque ladite électrode mobile (41) entre en contact avec l'un des deux composants (D1, D2) et à suspendre l'opération de soudage si la mesure (P) n'est pas comprise à l'intérieur d'une plage de variables (Pm, PM) représentatives de l'épaisseur minimum et maximum des composants (D1, D2).

2. Procédé selon la revendication 1, caractérisé en ce que pour permettre d'initialiser la mesure (P), il consiste pendant la phase de réglage de la machine de soudure par points à mettre en contact l'électrode fixe (22) avec l'électrode mobile (41), puis à réaliser une mesure (R) et assigner la valeur zéro à cette mesure pour définir une position de référence de l'électrode mobile (41).

3. Machine de soudure par points mettant en oeuvre le procédé de la revendication 1 ou 2 comprenant une électrode fixe (22), une électrode mobile (41) en direction de l'électrode fixe (22), ladite électrode mobile (41) étant prévue pendant la phase d'accostage pour entrer en contact avec l'un des deux composants (D1, D2) destinés à être soudés l'un à l'autre et préalablement déposés sur l'électrode fixe (22), et un capteur de position (70), caractérisée en ce que le capteur de position (70) est prévu pour réaliser une mesure (P) déterminant la distance séparant l'électrode fixe (22) de l'électrode mobile (41) lorsque ladite électrode mobile (41) entre en contact avec l'un des deux composants (D1, D2), et qu'elle comporte un calculateur (C) dans lequel sont introduites des variables (Pm, PM) représentatives de l'épaisseur minimum et maximum des composants (D1, D2), le calculateur (C) comparant la valeur de la mesure (P) avec la plage desdites variables et donne l'ordre d'interrompre le processus de soudage si la valeur de la mesure (P) est en dehors de la plage desdites variables

4. machine de soudure par points selon la revendication 3, caractérisée en ce que le capteur de position (70) est prévu pour réaliser une mesure (S) déterminant la réduction d'épaisseur des composants (D1, D2) pendant la phase de soudage, et que des variables (Sm, SM) représentatives des courses minimum Sm ou maximum SM acceptables de l'électrode mobile (41) pendant la phase de soudage sont introduites dans le calculateur (C), celui-ci comparant la valeur de la mesure (S) avec la plage desdites variables et donne l'ordre de rejeter les composants (D1, D2) soudés si la valeur de la mesure (S) est en dehors de la plage desdites variables.
